# EUROPÄISCHE PATENTSCHRIFT

(11) **EP 2 859 246 B1**
(45) Veröffentlichungstag und Bekanntmachung des Hinweises auf die Patenterteilung: **22.06.2016**
(21) Anmeldenummer: 13726800.9
(22) Anmeldetag: 05.06.2013
(51) Int. Cl.: C10M 169/04, F16C 33/16, F16C 33/28, F16C 33/20, F16C 33/10

(54) **GLEITSCHICHT UND GLEITELEMENT MIT EINER SOLCHEN GLEITSCHICHT**
SLIDING LAYER AND SLIDING ELEMENT WITH SUCH A LAYER
COUCHE DE GLISSEMENT ET ÉLÉMENT DE GLISSEMENT POURVU D'UNE TELLE COUCHE

(30) Priorität: 06.06.2012 DE 102012209592
(43) Veröffentlichungstag der Anmeldung: 15.04.2015
(73) Patentinhaber: Federal-Mogul Deva GmbH, 35260 Stadtallendorf (DE)
(72) Erfinder: GOLOB, Hannes, A-5310 Mondsee (AT); WALTER, Thomas, 350719 Angelburg-Gönnern (DE); PITZ, Dorit, 35260 Stadtallendof (DE); MÜLLER-BRODMANN, Martin, 35096 Weimar (DE); PITZ, Martin, 35260 Stadtallendorf (DE); SCHMIDT, Achim, 35085 Ebsdorfergrund (DE)
(74) Vertreter: Mehler Achler
(86) Internationale Anmeldenummer: PCT/EP2013/061536
(87) Internationale Veröffentlichungsnummer: WO 2013/182583

(56) Entgegenhaltungen:
- EP-A2- 0 791 632
- WO-A1-2011/040336
- US-A- 3 852 203

## Beschreibung

Die Erfindung betrifft eine Gleitschicht auf Basis eines faserverstärkten Kunststoffes gemäß dem Oberbegriff des Patentanspruchs 1. Sie betrifft ferner ein Gleitelement mit einer solchen Gleitschicht und die Verwendung des Gleitelements.

Gleitlagerelemente bestehen in der Regel aus einer Trägerschicht und einer Gleitschicht. Die Gleitschicht ist auf der Basis eines faserverstärkten Kunststoffes mit einer Kunststoffmatrix und Kunststofffäden als Verstärkungsmaterial hergestellt, wobei die Kunststofffäden Filamente aufweisen können. Solche Gleitschichten und Gleitelemente sind beispielsweise aus der DE 10 2006 043 065 B3 und der WO 2011040336 bekannt.

Windkraftanlagen, bei denen die Drehachse des Rotors im Wesentlichen horizontal liegt (Horizontalrotortyp), besitzen eine auf einem Turm gelagerte Maschinengondel.

Die Gondellagerung kann sowohl als Kugeldrehverbindung als auch als Gleitdrehverbindung ausgeführt sein. In jedem Fall erfolgt die Relativbewegung zwischen einem verzahnten turmfesten Lagerring und einem Lagerring an der Grundplatte des Maschinenträgers. Auf dem Maschinenträger sind mehrere Antriebsmotoren mit Untersetzungsgetriebe feststehend montiert, die jeweils über ein Antriebswellenritzel mit der Verzahnung des turmfesten Lagerrings in Eingriff stehen. Das System wird als Azimutlagerung (engl.: Yawsystem) bezeichnet.

Bei bekannten Windkraftanlagen werden die turbulenzbedingten Momente um die Turmdrehachse im Falle einer Kugeldrehverbindung i.d.R. durch separate Bremsen aufgenommen. Beim Einsatz einer Gleitlagerung (Gleitdrehverbindung), wie dies beispielsweise in US 6,814,493 B2 beschrieben, können die im Betrieb auftretenden Kräfte zu einem wesentlichen Teil durch die Reibung der Gleitbeläge kompensiert werden, sofern diese einen geeigneten Reibbeiwert aufweisen. Beide Arten von Azimutlagerungen haben in der Regel Antriebsmotoren, bei denen noch eine zusätzliche Bremse vorgesehen ist, um einen weiteren Teil der Betriebsdrehmomente und evtl. auftretende Extremlasten antriebsseitig abzudecken.

Beim Betrieb von Windkraftanlagen wird im Rahmen der Betriebsführung der Anlage für eine optimale Anströmung des Rotors die Gondel durch einen entsprechenden Antrieb um vorbestimmte Winkellagen um die Vertikale gedreht und dort festgehalten.

In diesem Betriebsfall können Quietsch- oder Rattergeräusche entstehen, die über den Resonanzkörper Turm weithin hörbar abgestrahlt und über die Fundamentierung in den Boden eingeleitet werden.

Die Quietsch- oder Rattergeräusche werden durch sogenanntes Ruckgleiten (engl. "stick-slip") verursacht. Es wurde festgestellt, dass die Schwingungsanregung im Gleitkontakt zwischen Gleitbelag und dem turmfesten Gleitring, der aus Stahl besteht, entsteht. Das Schwingen selber bzw. die Schwingungsfrequenz und -intensität wird aber vom Gesamtsystem (Resonator mit individuellen Massen und Federkonstanten) bestimmt.

Es wurde vermutet, dass eine Mindestenergie in den Resonator eingeleitet werden muss, um diese Quietsch- oder Rattergeräusche zu erzeugen.

Es wurde versucht, das Einleiten dieser Mindestenergie in den Resonator zu verhindern, indem an der Stelle der Entstehung, d.h. am Gleitlagerelement bzw. in unmittelbarer Nähe zum Gleitlagerelement, Maßnahmen ergriffen werden, diese Energie zu absorbieren.

Ein Lösungsansatz bestand in einer begrenzten Bewegung des Gleitlagerelementes und das Vorsehen von mindestens einem positiven Dissipationselement zwischen dem Gleitlagerelement und dem Lagergehäuse, wodurch diese Energie frühzeitig absorbiert wird, um die Quietschgeräusche zu verhindern.

Derartige Maßnahmen sind aufwendig und kostspielig, wobei die Quietschgeräusche nicht immer vollständig und zuverlässig verhindert werden konnten.

Aufgabe der Erfindung ist es, das Auftreten von Stick-Slip-Bewegungen und somit das Auftreten von Quietsch- oder Battergeräuschen bei Gleitschichten und Gleitelementen, insbesondere beim Einsatz in Windkraftanlagen, zu verhindern.

Diese Aufgabe wird mit den Merkmalen des Anspruchs 1 gelöst.

Durch die Zugabe von mindestens einer Metallseife als Bestandteil der Kunststoffmatrix der Gleitschicht können die Stick-Slip-Bewegung und somit die Quietsch- oder Rattergeräusche, insbesondere beim Einsatz mit Gegenläufern aus Stahl, weitgehend unterbunden werden können.

Es wird vermutet, dass die Ursache für die Quietsch- oder Rattergeräusche und für das Auftreten der Stick-Slip-Bewegung darin besteht, dass es im Laufe des Betriebs zwischen den Gleitelementen und dem Gegenläufer zu Verunreinigungen kommt. Als Hauptursache wird Leckageöl angesehen, das in geringen Mengen aus den Hydraulikanlagen, z. B. Steuer- und Bremsanlagen, entweicht und hierbei teilweise auch auf die Gleitverbindungen gelangen kann. Auch kann nicht ausgeschlossen werden, dass Schmiermittel bei Wartungsarbeiten z. B. am Gondelantrieb versehentlich mit der Gleitverbindung in Kontakt kommen oder dass Reste von Korrosionsschutzmitteln (Wachs oder Öl) nach erfolgter Montage des Stahlgleitrings nicht ausreichend entfernt wurden.

Versuche mit solchen z. B. in Windkraftanlagen verwendeten Hydraulikölen und Schmiermitteln zum Schmieren z. B. der Verzahnung des Maschinengondelantriebs haben gezeigt, dass damit verunreinigte Gleitelemente, die diese Metallseifen enthalten, den unerwünschten Stick-Slip-Effekt nicht zeigen.

Metallseifen sind an sich bekannt. Hierunter versteht man sämtliche Metallsalze der Fettsäuren mit Ausnahme der Natrium- und Kaliumsalze. Gebräuchliche Metallseifen sind Salze von Aluminium, Barium, Kadmium, Lithium, Kalzium, Magnesium, Zink, Blei, Mangan, Kupfer und Kobalt. Eine Übersicht über die vielfältigen Einsatzzwecke der verschiedenen Metallsalze findet sich in Ullmanns Encyklopädie der technischen Chemie "Schwefel bis Sprengstoffe", 4. Auflage, Band 21, Seite 224, 225].

Das Matrixmaterial enthält Graphit mit einem Anteil von 10 bis 20 Gew.-% bezogen auf die Kunststoffmatrix. Es hat sich gezeigt, dass die Zugabe von Graphit ohne die Zugabe von Metallseife hinsichtlich des Stick-Slip-Effektes keine ausreichend positiven Auswirkungen gezeigt hat. Umgekehrt konnte festgestellt werden, dass durch Zugabe von Metallseife unter Verzicht auf Graphit der Stick-Slip-Effekt wirksam vermindert oder sogar verhindert wird. Allerdings fehlt der positive Effekt des Transferfilmaufbaus, der für Graphit typisch ist und die Wirkung der Metallseife möglicherweise unterstützt.

Die Kombination aus Graphit und Metallseife wirkt sich aufgrund eines möglicherweise synergistischen Effektes vorteilhaft dahingehend aus, dass der Stick-Slip-Effekt in keinem der untersuchten Fälle beobachtet worden ist. Hierbei sind jeweils gleiche Anteile mit einer Schwankungsbreite von ± 2 Gew.-% von Graphit und Metallseife, insbesondere von Lithiumstearat, besonders bevorzugt. Dies gilt vorzugsweise für Anteile im Bereich von 10 bis 20 Gew.-% für das Lithiumstearat.

Der Anteil der Kunststoffmatrix an der Gleitschicht beträgt 40 Gew.-% bis 80 Gew-%. Damit beträgt der Anteil des Kunststofffadens an der Gleitschicht 20 Gew.-% bis 60 Gew.-%.

Vorzugsweise wird die Metallseife aus der Gruppe Aluminiumstearat, Bariumstearat, Kalziumstearat, Chromstearat, Lithiumstearat, Magnesiumstearat, Zinnstearat und Zinkstearat ausgewählt. Besonders bevorzugt ist Lithiumstearat (C₁₈H₃₅LiO₂). Lithiumstearat wird als die hochwertigste Metallseife beim Einsatz als Verdicker für technische Fette eingestuft. Der Vorteil des Lithiumstearats besteht in seiner Beständigkeit gegen Wasser, seinem weiten Anwendungstemperaturbereich und seiner Druckbeständigkeit.

Um den Stick-Slip-Effekt vollständig zu verhindern, ist eine Mindestmenge an Metallseifen erforderlich, die vorzugsweise bei 7,5 Gew.-%, bezogen auf das Matrixmaterial, liegt.

Die Maximalmenge ist vorzugsweise auf ca. 30 Gew.-% begrenzt, weil andernfalls die Festigkeit der Gleitschicht zu stark abnimmt, die vom Matrixmaterial bestimmt wird. Hierbei wird ein Matrixanteil an der gesamten Gleitschicht von mindestens 40 Gew.-% zugrundegelegt. Ein bevorzugter Bereich ist 40 Gew.-% bis 80 Gew.-%, insbesondere 60 Gew.-% bis 80 Gew.-%.

Vorzugsweise weist das Matrixmaterial Epoxidharz auf, das vorzugsweise den Hauptbestandteil darstellt. Als Hauptbestandteil bildet das Epoxidharz bezogen auf das gesamte Matrixmaterial den größten Anteil. Vorzugsweise liegt der Anteil des Epoxidharzes bei ≥ 35 Gew.-%. Epoxidharz besteht aus Polymeren, die je nach Reaktionsführung unter Zugabe geeigneter Härter einen duroplastischen Kunststoff von hoher Festigkeit und chemischer Beständigkeit ergeben. Werden Epoxidharz und Härter gemischt, erfolgt je nach Zusammensetzung und Temperatur üblicherweise innerhalb von wenigen Minuten bis einigen Stunden die Aushärtung des Gemischs.

Epoxidharze werden wie alle Polyether entweder durch katalytische Polymerisation von Epoxiden (Oxiranen) oder durch Umsetzung von Epoxiden, z. B. Epichlorhydrin mit Diolen, z. B. Bisphenol A dargestellt. Die Zugabe eines einwertigen Alkohols stoppt die Polymerisation.

Epoxidharze müssen für die Verarbeitung, sowohl bei der Herstellung von Gleitschichten im Wickelverfahren als auch zur Imprägnierung von Polymergeweben (sog. Prepreg-Technik) innerhalb eines bestimmten Viskositätsbereichs liegen, damit einerseits eine ausreichende Benetzung der Polymerfäden, anderseits eine ökonomische Verarbeitung erreicht wird. Die Zugabe von Metallseifen erhöht die Viskosität der oben angesprochenen Harzmischung.

Um das Epoxidharzgemisch, das das Matrixmaterial bildet, bei Raumtemperatur einsetzen zu können, ist ein Anteil von Metallseifen von max. 20 Gew.-% bevorzugt. Ein bevorzugter Bereich sind 10 bis 18 Gew.-%.

Die Gleitschicht auf Basis eines faserverstärkten Kunststoffes weist vorzugsweise einen Kunststofffaden als Verstärkungselement auf, der mindestens einen thermoplastischen Kunststoff aufweist. Als thermoplastischer Kunststoffe kommt bevorzugt Polyester oder Polyethylen in Frage. Der Kunststofffaden kann neben Polyester auch PTFE-Filamente enthalten oder das PTFE kann der oben beschriebenen Kunststoffmatrix in Pulverform zugesetzt werden.

Die Gleitschicht lässt sich mechanisch, d.h. spanabhebend gut bearbeiten. Die Verwendung des Kunststofffadens mit PTFE-Partikeln in der Gleitschicht eignet sich daher insbesondere für Präzisionsgleitlager, die beispielsweise durch spanende Bearbeitung auf Endmaß nachgearbeitet werden müssen.

Es ist vorteilhaft, wenn der Gewichtsanteil der PTFE-Partikel im Kunststofffaden zwischen 2 Gew.-% und 40 Gew.-% und der Gewichtsanteil der Polyesterfilamente im Kunststofffaden zwischen 60 Gew.-% und 98 Gew.-% beträgt. Besonders bevorzugt beträgt der Gewichtsanteil der PTFE-Partikel im Kunststofffaden zwischen 30 Gew.-% und 36 Gew.-%, während der Gewichtsanteil der Polyesterfilamente im Kunststofffaden zwischen 64 Gew.-% und 70 Gew.-% beträgt.

In diesem Gewichtsverhältnis bleibt die Haftung zwischen dem Kunststofffaden und der Kunststoffmatrix ausreichend hoch, so dass eine gute Bearbeitbarkeit erzielt wird. Andererseits ist der Anteil der PTFE-Partikel ausreichend hoch, um eine gute Gleiteigenschaft zu erzielen.

In einer vorteilhaften Ausführungsform der Gleitschicht weist das Verstärkungselement die Struktur eines aus dem Kunststofffaden erzeugten Gewebes oder Gewirkes auf.

Gemäß einer anderen bevorzugten Ausführungsform weist das Verstärkungselement eine Wickelstruktur auf, die durch Wickeln des Kunststofffadens auf einem Wickelkern erzeugt wurde.

Hierbei kommen die Vorzüge des verwendeten Kunststofffadens besonders gut zum Tragen. Aufgrund seiner Aufgerautheit eignet er sich nämlich hervorragend für die Herstellung von Gleitschichten im Wickelverfahren, bei dem der Faden zunächst durch eine Tränkwanne mit dem die Metallseife und Graphit enthaltenden Kunstharz, insbesondere Epoxidharz, geführt wird, und dabei ausreichend von dem Bandmaterial durchtränkt wird. Das Wickelverfahren bietet den Vorteil, dass damit eine bestimmte Wickelstruktur erzeugt werden kann, welche auf die beabsichtigte Anwendung des Gleitelementes bzw. der Gleitschicht abgestimmt ist. So können die Fasern möglichst beanspruchungsgerecht, d.h. der Kraft- und Spannungsverteilung entsprechend, im Faserverbund positioniert werden.

Für manche Anwendungen werden - zusätzlich zu den in den Kunststofffaden eingesponnenen PTFE-Partikeln - bevorzugt auch der Kunststoffmatrix PTFE-Partikel hinzugefügt. Der Anteil der PTFE-Partikel in der Kunststoffmatrix beträgt dabei höchstens 40 Gew.-%.

Es können ferner sowohl PTFE-Partikel als auch Graphit-Partikel der die Metallseife aufweisenden Kunststoffmatrix zugegeben werden, wobei der Gesamtgewichtsanteil der Partikel vorzugsweise nicht mehr als 40 Gew.-% beträgt.

Das erfindungsgemäße Gleitelement weist eine wie zuvor beschriebene Gleitschicht auf.

Im Fall von dünnwandigen Gleitelementen besteht die Möglichkeit, dass diese lediglich aus einer, vorzugsweise einschichtigen Gleitschicht bestehen. Zwar ist die mechanische Belastbarkeit nicht sehr groß, jedoch kann diese Bauform in Fällen geringer Belastung aus Kosten- und aus Platzgründen zu bevorzugen sein.

Vorzugsweise weist das Gleitelement eine Tragschicht auf, auf der sich mindestens die Gleitschicht befindet. Die Belastbarkeit ist bei dieser Ausführungsform größer. Bevorzugt weist das Gleitelement eine aus faserverstärktem Kunststoff bestehende Tragschicht auf.

Der faserverstärkte Kunststoff der Tragschicht besteht in einer vorteilhaften Ausführungsform ebenfalls aus einer Kunststoffmatrix mit einer Glasfaser als Verstärkungselement, wobei die Kunststoffmatrix bevorzugt aus einem Kunstharz, besonders bevorzugt aus Epoxidharz besteht.

Wie auch für die Kunststoffmatrix der Gleitschicht eignet sich Epoxidharz auch als Kunststoffmatrix für die Tragschicht aufgrund hervorragender Haftungseigenschaften sowie guter mechanischer und dynamischer Eigenschaften. Epoxidharz weist aufgrund seiner molekularen Struktur ferner eine sehr gute Feuchtigkeitsbeständigkeit und vergleichsweise wenig Quellneigung auf. Aufgrund der Verwendung derselben Kunststoffmatrix in der Gleitschicht und der Tragschicht erhöhen sich zudem die Bindungskräfte zwischen der Gleitschicht und der Tragschicht.

Da die Tragschicht keinen Kontakt mit einem Gleitpartner hat, wie dies bei der Gleitschicht der Fall ist, ist die Kunststoffmatrix vorzugsweise frei von Metallselfe und/oder Graphit.

Auch das Verstärkungselement der Tragschicht weist bevorzugt die Struktur eines aus der Glaserfaser erzeugten Gewebes oder Gewirkes oder in einer anderen bevorzugten Ausführungsform eine Wickelstruktur auf, die durch Wickeln der Glasfaser auf einen Wickeldorn erzeugt wird.

Werden die Gleitschicht und die Tragschicht nacheinander im Wickel-Verfahren auf einem Wickeldorn abgelegt, erhöht dies die Effizienz der Herstellung des Lagerverbundwerkstoffs.

Das Gleitelement wird vorzugsweise für die Lagerung von Windkraftgondeln eingesetzt. Weitere Merkmale und Vorteile der Erfindung werden nachfolgend anhand von Ausführungsbeispielen erläutert.

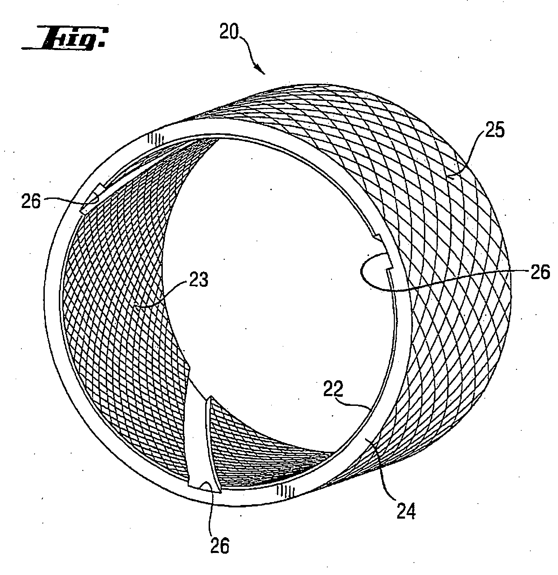

Die einzige Figur zeigt eine perspektivische Darstellung eines erfindungsgemäßen Gleitelements in Form eines Radialgleitlagers.

Das Anwendungsbeispiel zeigt ein Gleitelement, in diesem Fall eine Radialgleitlagerbuchse 20 gemäß der Figur. Diese weist auf ihrer Innenseite eine Gleitschicht 22 und auf ihrer Außenseite eine Tragschicht 24 auf. Die Gleitschicht 22 ist radial dünner ausgebildet als die Tragschicht 24.

Beide Schichten 22, 24 sind nacheinander im Wickelverfahren auf einem Wickeldorn abgelegt worden, wodurch die durch Kreuzschraffur dargestellte Wickelstruktur 23 bzw. 25 entsteht. Erkennbar ist weiterhin, dass der Abstand der Fäden in der Wickelstruktur 25 der Tragschicht 24 größer ist als in der Wickelstruktur 23 der Gleitschicht 22. Hiermit sei angedeutet, dass die Strukturen individuell an unterschiedliche Anforderungen angepasst werden können. Das Wickeln stellt für rotationssymmetrische Gleitelemente ein besonders einfaches und kostengünstiges Herstellungsverfahren dar, wobei sich die Wickelstrukturen 23 bzw. 25 der Verstärkungselemente der Gleitschicht 22 wie auch der Tragschicht 24 auf einfache Weise an die mechanischen Anforderungen des Lagers anpassen lassen. Neben den dargestellten einfachen Kreuzstrukturen lassen sich die Fäden nicht nur einzeln sondern beispielsweise auch zu Bündeln gruppiert wickeln, wodurch bevorzugt das Verstärkungselement der Tragschicht mit einer Kreuzstruktur gruppiert auf einen Wickeldorn gewickelter Faden- oder Faserbündel erzeugt werden kann.

Die Gleitschicht kann auf ihrer nach innen gewandten Seite Schmutznuten 26 aufweisen, die nach Aushärten des fertigen Wickelkörpers und Abtrennen der Lagerbuchse durch Räumen, Bohren, Drehen oder dgl. in die Gleitschicht eingearbeitet werden können.

In der Gleitschicht 22 und der Tragschicht 24 werden unterschiedliche Verstärkungselemente verwendet, nämlich Kunststofffäden in der Gleitschicht einerseits bzw. Glasfasern in der Tragschicht 24 andererseits. Der Hauptbestandteil der Kunststoffmatrix ist in beiden Schichten bevorzugt derselbe, nämlich Epoxidharz. Dieses eignet sich aufgrund seiner hervorragenden Haftungseigenschaften, mechanischen Eigenschaften und nicht zuletzt wegen seines vergleichsweise geringen Preises sehr gut. Alternativ können beispielsweise aber auch ungesättigte Polyesterharze oder Vinylesterharze verwendet werden.

Für die Tragschicht 24 kommen außer den bewährten Glasfasern auch beispielsweise Kohlefasern als Verstärkungselemente in Betracht. Auch kann der Faden zunächst zu einem Gewebe, Gewirke oder einem sonstigen Gelege vorverarbeitet werden.

Die Kunststoffmatrix der Gleitschicht 22 enthält mindestens eine Metallseife, insbesondere Lithiumstearat, mit einem Anteil von 7,5 bis 30 Gew.-%. Festschmierstoffe wie beispielsweise Graphit-Partikel oder PTFE-Partikel können beigemischt sein. Die Tragschicht 24 weist dagegen in aller Regel eine Kunststoffmatrix ohne Beimischung zusätzlicher Bestandteile auf.

Neben dem in der Figur dargestellten Radialgleitlager kann das erfindungsgemäße Gleitelement ferner auch die Gestalt eines Bundlagers, einer Anlaufscheibe, eines Loslagers oder Festlagers, einer Lagerschale oder einer Gleitplatte annehmen. Auch können unterschiedliche Laminierverfahren zur Herstellung eingesetzt werden. Beispielsweise können im so genannten Prepreg-Verfahren vorimprägnierte Verstärkungselemente in Form eines Gewebes, Gewirkes oder eines anderen Geleges in einem anschließenden Press- oder Autoklav-Verfahren zu den fertigen Gleitelementen zusammengefügt werden. Sie können aber auch im Injection-Mold-Verfahren hergestellt werden, bei dem vorgefertigte Matten in eine Form eingelegt werden, welche anschließend unter Druck mit dem Kunstharz gefüllt wird. Auch die vorverarbeiteten Gewebe, Gewirke oder sonstigen Gelege können im Wickelverfahren weiterverarbeitet werden.

### Beispiel 1 (erfindungsgemäßes Beispiel)

| Kunststoffmatrix: | |
|---|---|
| Epoxidharz: | 38 Gew% Epikote 827® |
| Härter: | 34 Gew% Epikure MNA® |
| Aktivator: | 1,74 Gew% Aktivator DMP30® |
| Additiv: | 0,26 Gew% Additiv BYK A525® |
| (Marken der Momentive Speciality Chemicals, 180 East Broad Street, Columbus, OH 43215, USA) | |
| Graphit | 13 Gew% |
| Lithiumstearat | 13 Gew% |

Der Anteil der Kunststoffmatrix am Gleitschichtmaterial beträgt 74 Gew.-%

| | |
|---|---|
| Kunststofffaden: | Polyester |

Der Anteil der Kunststofffäden am Gleitschichtmaterial beträgt 26 Gew.-%

Aus diesem Gleitschichtmaterial wurden im Wickelverfahren unter Verwendung eines Vierkantdorns Platten hergestellt, aus denen zunächst per Wasserstrahlschneiden und dann anschließender Drehbearbeitung kreisförmige Scheiben (sog. Pads) mit einem Durchmesser von 80 mm erzeugt wurden. Diese Pads sind Standardprüfteile für alle typischen Fläche/Fläche-Tests für Gleitelemente in Windkraftanlagen zur Azimutlagerung.

Die Tragschicht besteht aus einem Glasfaser/Epoxydharz-Compound.

Diese Testvorrichtung funktioniert wie folgt:
Der Prüfkörper (Pad) mit Nenndurchmesser 80 mm wird in einer entsprechend geformten Halterung fixiert. Als Gegenlauffläche dient eine Stahlplatte mit einer Oberflächenrauheit von Rₐ 0,5...0,8 µm und mit einer Härte von > 45HRC. HRC bezeichnet die Rockwell-Härte. Diese Stahlplatte ist ebenfalls in einer Halterung eingesetzt und wird mittels Hydraulikzylinder bei einer mittleren Gleitgeschwindigkeit v = 0,01 m/s linear bewegt. Die Bewegung ist translatorisch und besitzt eine Hublänge von +/- 80 mm. Die gewählte mittlere Flächenpressung orientiert sich an der für Gleitdrehverbindungen typischen Pressung von 20 MPa. Sie wird erzeugt, indem ein zweiter Hydraulikzylinder über ein Hebelsystem und eine wälzgelagerte Stahlrolle auf die Rückseite der Stahlprüfplattenhalterung eine konstante, vorher errechnete und eingestellte Kraft ausübt. Die Umgebungstemperatur während der Versuche ist 19° bis 21 °C.

Um die Entstehung von Stick-Slip-Effekten zu provozieren wird erstmalig nach ca. 10 Hubbewegungen die beim Hubmaximum frei liegende Oberfläche der Stahlplatte mit einem handelsüblichen Kriechöl (300 ml-Spraydose), Produktname "Multigliss®" besprüht. Multigliss® ist ein Produkt der Firma Dow Corning und erzeugt wegen seiner extrem guten Benetzungseigenschaften (niedrige Oberflächenenergie) sehr intensiv und früh das gefürchtete Ruckgleiten durch ungewünschte Adhäsionseffekte zwischen den Gleitpartnern.

### Beispiel 2

Wie Beispiel 1, jedoch ohne Graphit. Die Gew.-%-Anteile wurden im selben Verhältnis entsprechend angepasst.

### Beispiel 3 (Vergleichsbeispiel)

Zum Vergleich wurden Gleitelemente mit einer Kunststoffmatrix hergestellt, die dieselbe Zusammensetzung wie die erfindungsgemäße Zusammensetzung aufwies, jedoch kein Lithiumstearat enthält. Die Gew.-%-Anteile werden im selben Verhältnis angepasst.

Die Kunststofffäden bestehen ebenfalls aus Polyester.

Es wurde überprüft, ob der Stick-Slip-Effekt auftritt. Als Stick-Slip-Parameter kann die Anzahl von Testbewegungen (Hüben) bis zum ersten vernehmbaren Auftreten des Ruckgleitens verwendet werden.

Es hat sich gezeigt, dass in den Beispielen 1 und 2 auch nach 450 Hüben noch kein Stick-Slip-Effekt auftritt. Im Vergleichsbeispiel 3 trat bei 10 Versuchen das Rückgleiten nach 6 bis 12 Hüben auf.

### Bezugszeichenliste

- 20: Radialgleitlagerbuchse
- 22: Gleitschicht
- 23: Wickelstruktur (von 22)
- 24: Tragschicht
- 25: Wickelstruktur (von 24)
- 26: Schmutznut

## Patentansprüche

1. Gleitschicht (22) auf der Basis eines faserverstärkten Kunststoffes
- mit einer Kunststoffmatrix und
- mit mindestens einem Kunststofffaden als Verstärkungselement,
**dadurch gekennzeichnet,**
**dass** die Kunststoffmatrix Graphit und mindestens eine Metallseife aufweist, wobei der Anteil des Graphits in der Kunststoffmatrix 10 bis 20 Gew.-%, bezogen auf die Kunststoffmatrix, beträgt und dass der Anteil der Kunststoffmatrix an der Gleitschicht 40 Gew.-% bis 80 Gew.-% beträgt.

2. Gleitschicht (22) nach Anspruch 1,
**dadurch gekennzeichnet, dass** der Anteil der Metallseife an der Kunststoffmatrix 7,5 Gew.-% bis 30 Gew.-% beträgt.

3. Gleitschicht (22) nach Anspruch 1 oder 2,
**dadurch gekennzeichnet, dass** die Metallseife ausgewählt ist aus der Gruppe Aluminiumstearat, Bariumstearat, Kalziumstearat, Chromstearat, Lithiumstearat, Magnesiumstearat, Zinnstearat oder Zinkstearat.

4. Gleitschicht (22) nach einem der Ansprüche 1 bis 3,
**dadurch gekennzeichnet, dass** die Kunststoffmatrix Epoxidharz aufweist.

5. Gleitschicht (22) nach einem der Ansprüche 1 bis 4,
**dadurch gekennzeichnet, dass** die Kunststoffmatrix PTFE-Partikel aufweist.

6. Gleitschicht (22) nach einem der Ansprüche 1 bis 5,
**dadurch gekennzeichnet, dass** der Kunststofffaden mindestens einen thermoplastischen Kunststoff aufweist.

7. Gleitschicht (22) nach Anspruch 6,
**dadurch gekennzeichnet, dass** der thermoplastische Kunststoff Polyester oder Polyethylen ist.

8. Gleitschicht (22) nach einem der Ansprüche 1 bis 7,
**dadurch gekennzeichnet, dass** das Verstärkungselement die Struktur eines aus einem Kunststofffaden erzeugten Gewebes oder Gewirkes aufweist.

9. Gleitschicht (22) nach einem der Ansprüche 1 bis 7,
**dadurch gekennzeichnet, dass** das Verstärkungselement eine Wickelstruktur aufweist, die durch Wickeln des Kunststofffadens auf einem Wickelkern erzeugt wird.

10. Gleitelement mit einer Gleitschicht (22) nach einem der Ansprüche 1 bis 9.

11. Gleitelement (20) nach Anspruch 10,
**gekennzeichnet durch** eine Tragschicht (24) aus einem faserverstärkten Kunststoff.

12. Verwendung eines Gleitelementes nach einem der Ansprüche 10 oder 11 für die Lagerung von Windkraftgondeln.

## Claims

1. Sliding layer (22) based on a fibre-reinforced plastics material
- having a plastics material matrix and
- having at least one plastics material thread as a reinforcement element,
**characterised in that**
the plastics material matrix has graphite and at least one metal soap, wherein the proportion of the graphite in the plastics material matrix is from 10 to 20% by weight with respect to the plastics material matrix, and **in that** the proportion of the plastics material matrix on the sliding layer is from 40% by weight to 80% by weight.

2. Sliding layer (22) according to claim 1,
**characterised in that** the proportion of the metal soap on the plastics material matrix is from 7.5% by weight to 30% by weight.

3. Sliding layer (22) according to claim 1 or claim 2,
**characterised in that** the metal soap is selected from the group aluminium stearate, barium stearate, calcium stearate, chromium stearate, lithium stearate, magnesium stearate, tin stearate or zinc stearate.

4. Sliding layer (22) according to any one of claims 1 to 3,
**characterised in that** the plastics material matrix has epoxy resin.

5. Sliding layer (22) according to any one of claims 1 to 4,
**characterised in that** the plastics material matrix has PTFE particles.

6. Sliding layer (22) according to any one of claims 1 to 5,
**characterised in that** the plastics material thread has at least one thermoplastic plastics material.

7. Sliding layer (22) according to claim 6,
**characterised in that** the thermoplastic plastics material is polyester or polyethylene.

8. Sliding layer (22) according to any one of claims 1 to 7,
**characterised in that** the reinforcement element has the structure of a woven fabric or a knitted fabric produced from a plastics material thread.

9. Sliding layer (22) according to any one of claims 1 to 7,
**characterised in that** the reinforcement element has a wound structure which is produced by winding the plastics material thread on a winding core.

10. Sliding element having a sliding layer (22) according to any one of claims 1 to 9.

11. Sliding element (20) according to claim 10,
**characterised by** a carrier layer (24) of a fibre-reinforced plastics material.

12. Use of a sliding element according to either claim 10 or claim 11 for supporting wind power pods.

## Revendications

1. Couche de glissement (22) à base d'une matière plastique renforcée par des fibres comprenant
- une matrice de matière plastique et
- au moins un fil de matière plastique comme élément de renforcement,
**caractérisée en ce**
**que** la matrice de matière plastique présente du graphite et au moins un savon métallique, la part du graphite dans la matrice de matière plastique étant de 10 à 20 % en poids, par rapport à la matrice de matière plastique, et que la part de la matrice de matière plastique dans la couche de glissement est de 40 % en poids à 80 % en poids.

2. Couche de glissement (22) selon la revendication 1,
**caractérisée en ce que** la part du savon métallique dans la matrice de matière plastique est de 7,5 % en poids à 30 % en poids.

3. Couche de glissement (22) selon la revendication 1 ou 2,
**caractérisée en ce que** le savon métallique est sélectionné dans le groupe suivant : stéarate d'aluminium, stéarate de baryum, stéarate de calcium, stéarate de chrome, stéarate de lithium, stéarate de magnésium, stéarate d'étain ou stéarate de zinc.

4. Couche de glissement (22) selon l'une des revendications 1 à 3,
**caractérisée en ce que** la matrice de matière plastique présente de la résine époxy.

5. Couche de glissement (22) selon l'une des revendications 1 à 4,
**caractérisée en ce que** la matrice de matière plastique présente des particules de PTFE.

6. Couche de glissement (22) selon l'une des revendications 1 à 5,
**caractérisée en ce que** le fil de matière plastique présente au moins une matière plastique thermoplastique.

7. Couche de glissement (22) selon la revendication 6,
**caractérisée en ce que** la matière plastique thermoplastique est du polyester ou du polyéthylène.

8. Couche de glissement (22) selon l'une des revendications 1 à 7,
**caractérisée en ce que** l'élément de renforcement présente la structure d'un tissu ou d'un tricot produit à partir d'un fil de matière plastique.

9. Couche de glissement (22) selon l'une des revendications 1 à 7,
**caractérisée en ce que** l'élément de renforcement présente une structure enroulée qui est produite par enroulement du fil de matière plastique sur un noyau d'enroulement.

10. Elément de glissement pourvu d'une couche de glissement (22) selon l'une des revendications 1 à 9.

11. Elément de glissement (20) selon la revendication 10,
**caractérisé par** une couche de support (24) dans une matière plastique renforcée par des fibres.

12. Utilisation d'un élément de glissement selon l'une des revendications 10 ou 11 pour le support de nacelles d'éoliennes.
